Europäisches Patentamt

(19) **European Patent Office**

Office européen des brevets

(11) Numéro de publication: **0 253 781**
**A2**

(12) **DEMANDE DE BREVET EUROPEEN**

(21) Numéro de dépôt: **87830262.9**

(22) Date de dépôt: **08.07.87**

(51) Int. Cl.⁴: **C 04 B 28/02**
C 04 B 28/14
//(C04B28/02,16:06,18:24,
24:38),(C04B28/14,16:06,18:24,
24:38)

(30) Priorité: **18.07.86 IT 1251486**

(43) Date de publication de la demande:
**20.01.88 Bulletin 88/03**

(84) Etats contractants désignés:
**AT BE CH DE ES FR GB GR LI NL SE**

(71) Demandeur: **Raffaelli, Roberto**
**Via G.DI Vittorio 57**
**I-50019 Sesto Fiorentino (FI) (IT)**

**Romei, Ezio**
**Via G. Berchet, 64**
**Sesto Fiorentino (Firenze) (IT)**

(72) Inventeur: **Romei, Ezio**
**Via G. Berchet 64**
**Sesto Fiorentino Firenze (IT)**

(74) Mandataire: **Martini, Lazzaro**
**Ufficio Brevetti Ing. Lazzaro Martini Via Brunelleschi, 1**
**I-50123 Firenze (IT)**

(54) **Composition plastique durcissante à base d'une matière hydratable de prise, de fibres synthétiques ou naturelles et de liants organiques.**

(57) Composition plastique durcissante à base d'une matière, hydratable de prise, comme du coment ou du plâtre, de fibres synthétiques, comme par exemple des fibres acryliques, de fibres naturelles, comme des fibres cellulosiques, et de liants organiques hydrosolubles, du type des ethers de la cellulose solubles dans l'eau, parmi lesquels l'hydroxy-propylmétyl-cellulose (HPMC). Une composition typique contient, en parts en poids:

    Eau    de 800 à 1300 parts
    HPMC    de 50 à 100 parts
    Fibres acryliques    de 100 à 150 parts
    Ciment    de 2000 à 5000 parts
    Anti moisissure    de 2 à 4 parts

Une telle composition peut être préssée dans des moules, ou être travaillée en plaques à la calandre, ou de manière analogue. Elle permet d'obtenir des produits manufacturés, comme des panneaux, avec des parois très fines et légers, ayant une bonne résistance à la flexion, et une résistance élevée aussi bien à la compression qu'à la traction et à la rupture. Les produits manufacturés obtenus sont hautement calorifuges et imperméables. Il est possible d'ajouter à la composition selon l'invention des pigments appropriés, de manière à obtenir des produits manufacturés colorés.

EP 0 253 781 A2

Bundesdruckerei Berlin

## Description

"Composition plastique durcissante à base d'une matière hydratable de prise, de fibres synthétiques ou naturelles et de liants organiques".

La présente invention a pour objet une composition plastique durcissante à base d'une matière hydratable de prise, telle que le ciment, et de fibres naturelles et/ou syntétiques, en plus d'un liant organique.

On connaît des compositions durcissantes à base de ciment et de fibres minérales (amiante), avec lesquelles il est possible de réaliser des produits manufacturés présentant une résistance élévée, aussi bien mécanique qu'aux agents externes et chimiques. Ces compositions connues présentent cependant de graves désavantages, aussi bien provenant du fait qu'elles contienent des fibres telles que celles d'amiante, notoirement cancérogènes, que provenant du fait que, s'agissant de compositions non plastiques, elles ne sont pas susceptibles d'être travaillées dans des moules à la presse à commande hydraulique. En outre, ces compositions ne permettent pas d'obtenir des produits manufacturés avec de faibles épaisseurs de l'ordre de 2 mm ou même moins, étant donné que de tels matériaux se révèlairent fragiles. Elles ne se prêtent pas en outre à être modellées à la main, de manière analogue à n'importe quel argile plastique. En outre, de tels matériaux connus ont tous un poids spécifique relativement élévé, et de ce fait les objets produits se révèlent relativement pesants.

La présente invention a donc pour but principal une nouvelle composition durcissante à base de ciment, et de fibres naturelles et/ou synthétiques, qui supprime les inconvénients des compositions connues mentionnées ci-dessus, et qui avant le durcissement a une consistance plastique telle qu'elle permet le travail à la presse, ou le modelage à la main.

Suivant une de ses caractéristiques principales, la composition selon l'invention comprend un mélange acqueaux composé d'une matière hydratable de prise, telle que le ciment ou le plâtre, des fibres naturelles végétales comme des fibres de jute, de coton ou analogues, ou synthétique telles que des fibres acryliques, polyuréthaniques ou analogues, des liants organiques hydrosolubles, tels que les éthers de la cellulose solubles dans l'eau, comme par exemple l'hydroxy-propyl-méthyl-cellulose (HPMC), l'hydroxy-éthyl-méthyl-cellulose (HEMC), la méthyl-cellulose (MC) ou la carboxy-méthyl cellulose (CMC) et leurs sels solubles dans l'eau, comme par exemple la sodio-carboxy-méthyl-cellulose (CMC-Na). De préférence, on utilise les éthers de la cellulose de viscosité élévée, comme par exemple la HPMC 30.000 qui a une viscosité de 30.000 cps en solution à 2% dans l'eau à 20°C. De telles compositions peuvent en outre contenir éventuellement des matières inertes de charge aussi bien minérales, comme du sable, du carbonate de calcium, des terres d'infusoires (diatomées), du quarts, des argiles expansés ou analogues, que végétales, comme des fibres de cellulose ou du papier défibré, combiné à des quantités mineures d'autres substances telles que des agents antimoisissure, des pigments et des colorants, des agents accélérateurs de prise, et analogues.

Les mélanges obtenus avec la composition selon l'invention se prêtent à être travaillées de n'import quelle manière adaptée pour leur transformation en produits manufacturés, et par exemple au moyen d'un moulage à la presse à commande hydraulique, au moyen d'un calandrage pour la trasformation en plaques, ou analogues. Ils peuvent également être travaillés manuellement, de manière tout à fait analogue à celles utilisées pour les argiles plastiques dans l'industrie de la céramique ou dans les laboratoires de poterie.

En outre, de tels mélanges étant pourvus de caractéristiques d'adhésivité élévée, ils peuvent être utilisés comme stucs durcissants pour le masticage des parois ou terrasses, en considération également de leur degré élévée d'imperméabilité, ou pour des travaux de réparation en général.

De cette manière, par exemple, les mélanges selon l'invention peuvent être utilisés pour la réalisation de manteaux ou couvertures imperméabilisants pour des terrasses ou des toits. Ils se prêtent en outre la réalisation de matériaux composites, et par exemple des matériaux comprenant une ou plusieurs couches d'un tissu, et par exemple un tissu de jute ou de fibres synthétiques, et d'une ou plusieurs couches alternées du matériau selon l'invention, permettant d'obtenir un produit final ayant des catactéristiques de résistance et légèreté qui ne peuvent pas être obtenues avec les matériaux connus de ce type.

Ils se pretênt de plus, étant données leurs caractéristiques élévées d'adhésivité, à la réalisation de matériaux composites avec d'autres matériaux en plaque, et par exemple avec des plaques de polystyrène, ou avec des matériaux tels que des feutres, obtenant comme produit final des plaques de faible poids spécifique, pourvues d'un degré très élévé d'isolation, de haute résistance mécanique et aux agents chimiques et parfaitement imperméables.

Ci-après, sont reportées, à titre d'exemple non limitatif, quelques compositions de matériaux selon l'invention.

Exemple I

On prépare une composition typiques selon l'invention en mélangeant à froid ensemble les composants suivants, dans les proportions en parts en poids indiquées:

Eau de 800 à 1300 parts en poids
HPMC de 50 à 100 parts en poids
Fibre acryliques longues de 100 à 150 parts en poids
Ciment de 2000 à 5000 parts en poids
Agent anti moisissure de 2 à 4 parts en poids

## Exemple II

On prépare une composition du type de celle de l'"exemple I, en utilisant à la place des fibres acryliques longues, des fibres acryliques courtes:

Eau de 1000 à 1500 parts en poids
HPMC de 50 à 100 parts en poids
Fibres acryliques
courtes de 100 à 200 parts en poids
Ciment de 1500 à 3000 parts en poids
Agent anti moisissure de 2 à 4 parts en poids

## Exemple III

On prépare une composition du type énoncée dans l'exemple I, en y ajoutant en outre comme matériau inerte de charge, environ 1000 parts en poids de sable.

## Exemple IV

On prépare une composition du type de celle décrite dans l'exemple I, en y entroduisant à la place du ciment, une quantité de 1000 à 2500 parts en poids de plâtre. On obtient un produit final ayant une dureté très supérieure à celle du plâtre de prise.

Dans les composition décrites dans les exemples I à IV, on peut ajouter ultérieurement des pigments et des colorants, afin d'obtenir des produits finaux ayant une coloration particulière.

A la place des fibres acryliques, il est possible d'utiliser des fibres synthétiques différentes, et par exemple des fibres polyuréthaniques.

A la place des fibres synthétiques, ou en combinaison avec celles-ci, il est possible d'utiliser également des fibres naturelles végétales, telles que de la jute ou du coton.

En tant que matériaux de charge appropriés, on peut utiliser, à la place du sable mentionné dans l'exemple III, d'autres matériaux inertes non organiques tels que du carbonate de calcium, du quartz en poudre, des terres d'infusoires, de l'argile expansé ou analogues. Il est également possible d'utiliser en tant que matériaux de charge, des substances organiques telles que des fibres de cellulose, du papier defibré et analogues. Ces matériaux de charge sont introduits de préférence dans la composition en proportion d'environ 50% en poids par rapport au poids du ciment utilisé.

A la place du ciment on peut utiliser un autre matériau hydratable de prise tel que le plâtre, comme indiqué dans l'exemple IV. En utlisant la plâtre à la place du ciment, celui-ci est introduit dans la composition dans une proportion inférieure à la proportion corrispondante du ciment, et correspondant environ à 50% en poids de la quantité de ciment qui aurait été utilisée.

Comme indiqué précedemment, la composition selon l'invention peut contenir également des proportions mineures d'additifs appropriés, tels que des substances colorantes, pigmentaires, des substances anti moisissure ou même des substances aptes à accélérer le durcissement de la composition.

De par ses caractéristiques, le mélange selon l'invention peut être utilisé comme stuc, ou pour coller entre eux des panneaux de polystyrène expansé ou de polyuréthane expansé. Il peut être utilisé en outre comme colle ou adhésif pour l'application de moquettes sur les sols, pour le collage de pièces en bois, fer, terres cuites ou analogues.

Il se prête à être utilisé pour la réparation des sols, des récipients d'eau, et analogues, ou pour l'imperméabilisation de panneaux en tissus de fibres végétales ou synthétiques. Il se prête également à être modelé manuellement, et naturellement, pour la production de produits manufacturés à l'échelle industrielle, par moulage en presses à commande hydraulique, ou par calandrage, pour l'obtention de plaques, et ceci grâge également au fait, très important, que les produits manufacturés réalisés avec la composition selon l'invention ne présentent pas de phénomènes de retrait pendant leur durcissement, et de ce fait maintiennent inaltérées leurs caractéristiques dimensionnelles.

Il se prête en outre à la réalisation de panneaux à structure alvéolaire, constitués de deux plaques externes et d'une structure alvéolaire, ou à nld d'abeille, ou tout autre structure interne appropriée.

## Revendications

1) Composition plastique durcissante à base d'un mélange acqueux d'au moins une matière hydratable de prise avec des matières inertes de charge, des fibres naturelles et/ou synthétiques, caractérisée en ce qu'elle comprend en outre un liant hydrosoluble organique.

2) Composition selon la revendication 1) caractérisée en ce que ledit liant organique hydrosoluble est un éther de la cellulose soluble dans l'eau, tel que l'hydroxy-propyl-méthil-cellulose (HPMC) ou l'hydroxy-éthyl-méthyl-cellulose (HEMC) ou le méthyl-cellulose (MC) ou le carboxy-méthyl-cellulose (CMC) ou un de leurs sels solubles dans l'eau tels que les sels de sodium ou potassium, ou un mélange de tels éthers de la cellulose.

3) Composition selon la revendication 1) dans laquelle ladite matière hydratable de prise est du ciment.

4) Composition selon la revendication 1) dans laquelle ladite matière hydratable de prise est du plâtre.

5) Composition selon la revendication 1) dans laquelle lesdites fibres naturelles sont des fibres végétales, comme le jute ou le coton.

6) Composition selon la revendication 1) dans laquelle lesdites fibres synthétiques sont des fibres polyuréthaniques et/ou acrhliques.

7) Composition selon la revendication 5) et 6) dans laquelle lesdites fibres naturelles et/ou synthétiques sont des fibres courtes et/ou longues.

8) Composition selon la revendication 1) dans laquelle lesdites matières de charge sont des matières minérales telles que du sable, carbonate de calcium, terres d'infusoires, quartz en poudre, argiles expansés, ou des matières inertes analogues.

9) Composition selon la revendication 1) dans laquelle lesdites matières de charge sont des matières organiques telles que de la cellulose, pulpe de papier, papier défibré ou analogues.

10) Composition selon les revendications précédentes, comprenant ultérieurement des additifs spécifiques tels que des agents anti moisissure, colorants et pigmentaires.

11) Composition selon les revendications précédentes, comprenant, en parts en poids:
Eau      de 800 à 1500 parts
HPMC     de 50 à 100 parts
Fibres synthétiques ou naturelles     100 a 200 parts
Ciment     de 1500 à 3000 parts

12) Composition selon la revendication 11) comprenant ultérieurement 2 à 4 parts en poids d'un agent anti moisissure, en plus de faibles pourcentages d'un accélérant de durcissement approprié, et/ou de substances colorantes ou pigmentaires.

13) Composition selon la revendication 11) comprenant ultérieurement une quantité inférieure ou égale au maximum à 50% en poids du poids de la quantité de ciment de la composition, d'une matière inerte de charge du type des matières énoncées dans les revendications 8) et 9).

14) Composition selon les revendications précédentes, comprenant en parts en poids:
Eau      de 800 à 1500 parts
HPMC     de 50 à 100 parts
Fibres synthétiques ou naturelles     100 à 200 parts
Plâtre     de 2000 à 5000 parts

15) Composition selon la revendication 14) comprenant ultérieurement 2 à 4 parts en poids d'un agent anti moisissure, outre éventuellement à de faibles quantités de colorants et/ou pigments.

16) Composition selon les revendications précédentes, utilisant comme fibres synthétiques, des fibres acryliques longues telles que décrites dans l'exemple I.

17) Utilisation de la composition plastique selon les revendication précédentes, comme matière première pour la fabrication de produits et/ou d'éléments ou panneaux préfabriques.

18) Utilisation de la composition plastique selon les revendications précédentes, comme matériau de couverture pour la réalisation de manteaux ou de couvertures imperméables et/ou imperméabilisantes.

19) Utilisation de la composition plastique selon les revendications précédentes, comme stuc, ou mastic.

20) Utilisation de la composition plastique selon les revendication précedentes, pour la realisation de produits manufacturés composites tels que des produits manufacturés à plusieurs couches alternées d'un matériau plastique expanse en plaque, comme le polyurethane ou le polystyrène, reliées entre elles par une mince couche de la composition plastique même.

21) Utilisation de la composition plastique selon les revendications précédentes, comme matériau structurel en combinaison à des tissus de fibres synthétiques ou naturelles pour la réalisation de panneaux ou analogues.